# EUROPÄISCHE PATENTSCHRIFT

(11) **EP 3 469 340 B1**
(45) Veröffentlichungstag und Bekanntmachung des Hinweises auf die Patenterteilung: **11.05.2022**
(21) Anmeldenummer: 17729453.5
(22) Anmeldetag: 08.06.2017
(51) Int. Cl.: B08B 5/02, B08B 9/20, B08B 9/28, G01N 21/90, B08B 7/02, B08B 9/46

(54) **VORRICHTUNG UND VERFAHREN ZUM INSPIZIEREN VON BEHÄLTNISSEN**
APPARATUS AND METHOD FOR INSPECTING CONTAINERS
DISPOSITIF ET PROCÉDÉ D'INSPECTION DE RÉCIPIENTS

(30) Priorität: 08.06.2016 DE 102016110540
(43) Veröffentlichungstag der Anmeldung: 17.04.2019
(73) Patentinhaber: Krones AG, 93073 Neutraubling (DE)
(72) Erfinder: LINDNER, Peter, 93073 Neutraubling (DE)
(74) Vertreter: Bittner, Bernhard
(86) Internationale Anmeldenummer: PCT/EP2017/063999
(87) Internationale Veröffentlichungsnummer: WO 2017/211974

(56) Entgegenhaltungen:
- EP-A1- 1 977 807
- EP-A1- 2 087 945
- EP-A1- 2 292 340
- EP-A1- 2 591 864
- EP-A2- 2 409 790
- WO-A1-2015/080965
- DE-A1-102011 015 069
- DE-U1- 20 317 458
- JP-A- H07 291 395
- US-A1- 2006 042 671

## Beschreibung

Die vorliegende Erfindung bezieht sich auf eine Vorrichtung und ein Verfahren zum Inspizieren von Behältnissen und insbesondere von Glas- oder Kunststoffbehältnissen. Die Behältnisse können dabei leer oder auch gefüllt und verschlossen sein. Aus dem Stand der Technik sind zahlreiche derartiger Vorrichtungen und Verfahren bekannt, bei denen die Behältnisse überwiegend mit optischen Mitteln inspiziert werden. Ein Problem dieser Inspektion besteht darin, dass die Behältnisse zur Inspektionsmaschine auf Transportbändern oder Transportketten gefördert werden, die mittels Transportbandschmierung behandelt werden. Die Schmiermittel können wässrige seifenhaltige Lösungen sein oder auch Aminverbindungen z. B. nach US 4,839,067; 4,521,321; 4,604,720 oder EP-A-372 628. Nachteilig für eine Inspektion ist, dass einerseits eine (geringe) Schaumbildung auf dem Transporteur gewünscht ist, da der Schaum ein Indikator für die Anwesenheit des Schmiermittels darstellt. Andererseits verhindern derartige Schäume eine ordnungsgemäße optische Inspektion. Genauer wird die Inspektionsgenauigkeit reduziert, da keine Ausleitung der jeweiligen Behältnisse aufgrund von Schaum erfolgen sollte bzw. es zu einer erhöhten Fehlausleitrate wegen Schaumrückständen kommen sollte.

Aus dem Stand der Technik ist es daher bekannt, dass die Behältnisse, bevor sie in eine Inspektionseinrichtung gelangen, mittels Luft bzw. Druckluft behandelt werden (DE20317458U1) und insbesondere Schäume und dergleichen abgeblasen werden und zusätzlich noch eine Abschwallung der Transporteurkette mit Wasser erfolgt.

Diese Vorgehensweise erlaubt zwar eine verbesserte optische Inspektion der Behältnisse, allerdings müssen zu diesem Zweck Abblaseinrichtungen eingesetzt werden, welche eine hinreichende Kapazität aufweisen, um über größere Bereiche der Behältnisse hinweg Schäume in weniger als 30ms abblasen zu können. Durch die zusätzliche Wasserabschwallung kann Wasser in die Inspektionseinrichtung gelangen.

Daneben gibt es durch die im Stand der Technik eingesetzten hohen Drücke von bis zu 6 bar bei der Abblasung auch zu starken Luftverwirbelungen bzw. enormen, knallartigen Lautstärkepegeln in der Frequenz des Behälterflusses. Dies wiederum kann zu einer erhöhten Kontamination der bereits gereinigten Behältnisse führen. Daneben kann es gerade bei hohen Drücken vorkommen, dass Schaum an der Außenwandung der Behältnisse hochgeblasen wird. Daneben ergeben sich auch höhere Betriebskosten bei der Erzeugung von Druckluft sowie ein höherer Wasserverbrauch, um die Abschwallung zu erreichen.

Aus JP H07 291395 A und EP 1 977 807 A1 sind Schallerzeugungsvorrichtungen bekannt, die dazu eingerichtet sind, in befüllten Behältern Schaum auf der Flüssigkeit in den Behältern durch die obere Behältereinfüllöffnung anhand von Schallwellen zu beseitigen.

Der vorliegenden Erfindung liegt daher die Aufgabe zugrunde, eine Vorrichtung und ein Verfahren zur Verfügung zu stellen, welche auf vereinfachte Weise eine Inspektion und insbesondere auch eine optische Inspektion von Behältnissen ermöglichen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine wie in Anspruch 1 definierte erfindungsgemäße Vorrichtung zum Inspizieren von Behältnissen weist eine Transporteinrichtung auf, welche die Behältnisse entlang eines vorgegebenen Transportpfades transportiert und eine Inspektionseinrichtung, welche die Behältnisse inspiziert. Dabei weist die Vorrichtung eine der Inspektionseinrichtung in der Transportrichtung (d.h. insbesondere in der Richtung des Transportpfads) der Behältnisse vorangestellte Reinigungseinrichtung auf, welche die Behältnisse wenigstens abschnittsweise an deren Außenoberflächen reinigt. Erfindungsgemäß weist diese Reinigungseinrichtung wenigstens eine Schallerzeugungseinrichtung auf, welche zumindest auch derart auf Böden der Behältnisse ausgerichtet ist, dass an diesen Böden befindlicher Schaum zumindest teilweise zerstört wird.

Es wird daher also eine Vorrichtung vorgeschlagen, welche insbesondere dazu dient, um an den Böden der Behältnisse auftretenden Schaum zu entfernen. Wie oben erwähnt, wurde ein derartiges Ablösen von Schäumen im Stand der Technik beispielsweise mit Druckluft ermöglicht. Allerdings hatte diese Abblasung den Nachteil, dass Schaum- bzw. Flüssigkeitsreste weiter in die Inspektionseinrichtung getragen werden. Die hier beschriebene Vorgehensweise, bei der der Schaum mittels Ultraschall zerstört wird, hingegen ermöglicht es, auf eine Druckluftbeaufschlagung zu verzichten. Bevorzugt handelt es sich bei der Inspektionseinrichtung um eine optisch arbeitende Inspektionseinrichtung. Dabei ist es möglich, dass die Behältnisse im Durchlichtverfahren inspiziert werden. Es wäre jedoch auch möglich, dass die Behältnisse mittels eines Auflichtverfahrens inspiziert werden. Vorteilhaft wird wenigstens ein Abschnitt der Behältnisse von der Inspektionseinrichtung durchleuchtet und eine Bildaufnahmeeinrichtung nimmt wenigstens ein Bild des so durchleuchteten Behältnisses auf.

Es wäre auch möglich, dass die Schallerzeugungseinrichtungen zusätzlich oder alternativ auf andere Bereiche der Behältnisse ausgerichtet sind, wie etwa auf deren Grundkörper oder deren Schulterbereich, insbesondere um von dort Schaumrückstände zu entfernen. Die Anmelderin behält sich daher auch vor, Schutz zu beanspruchen für eine Vorrichtung und ein Verfahren, bei dem die Schallerzeugungseinrichtung nicht oder nicht nur auf die Böden der Behältnisse ausgerichtet sind sondern (evtl. zusätzlich oder alternativ) auf andere Bereiche der Behältnisse. Derartige Schallerzeugungseinrichtungen könnten beispielsweise seitlich neben dem Transportpfad der Behältnisse angeordnet sein. Auch wäre es denkbar, dass die Behältnisse im Bereich solcher Schallerzeugungseinrichtung um ihre Längsachse gedreht werden.

Bei einer weiteren vorteilhaften Ausführungsform weist die Transporteinrichtung mehrere Transporteinheiten auf, welche zum Transport der Behältnisse dienen. So kann die Transporteinrichtung mehrere Transporteinheiten aufweisen, die beispielsweise auch unterschiedlich ausgeführt sein können. So können die Behältnisse beispielsweise abschnittsweise mittels eines Bodentransportbandes transportiert werden, teilweise mittels Seitenführungsbändern und auch teilweise mittels Klammerelementen, welche die Behältnisse an deren Mündungen greifen. Bei einer weiteren vorteilhaften Ausführungsform ist die Transporteinrichtung derart ausgestaltet, dass sie die Behältnisse einreihig transportiert. Insbesondere werden die Behältnisse einreihig auch durch die Inspektionseinrichtung transportiert.

Bei einer weiteren vorteilhaften Ausführungsform handelt es sich bei der Reinigungseinrichtung insbesondere um eine Rückstandentfernungseinrichtung. Insbesondere handelt es sich hierbei um eine Rückstandentfernungseinrichtung, die Rückstände von den Behältnissen entfernt, die bei vorangegangenen Verfahrensschritten aufgetreten sind. Bei einer weiteren vorteilhaften Ausführungsform handelt es sich bei den Behältnissen insbesondere um Glasflaschen oder Kunststoffflaschen.

Vorteilhaft handelt es sich jedoch bei dem auftretenden Schaum nicht um einen Schaum, der von dem in die Behältnisse eingefüllten Produkt stammt, sondern um Schaum, der insbesondere während vorangegangenen Verfahrensschritten und beispielsweise einem Transport der Behältnisse auf die Außenoberfläche und insbesondere die Böden der Behältnisse gelangt ist. Bei einer weiteren vorteilhaften Ausführungsform weist die Schallerzeugungseinrichtung eine Schallsonotrode und insbesondere eine Ultraschallsonotrode auf.

Es ist grundsätzlich aus dem Stand der Technik bekannt, dass mittels Ultraschall Schäume zerstört werden können. Die Erfindung nutzt dies, um insbesondere an Behältnisböden auftretende Schaumreste entfernen zu können. Eine derartige Vorgehensweise wurde im Stand der Technik noch nicht vorgeschlagen, da davon ausgegangen wurde, dass die relativ großen Flächen der Behältnisböden, an denen der Schaum auftritt, nicht für eine Zerstörung des Schaums mittels Ultraschall geeignet sind (im Gegensatz etwa zu den räumlich eng begrenzten Öffnungen der Behältnismündungen).

Bei einer bevorzugten Ausführungsform weist die Vorrichtung wenigstens eine und bevorzugt mehrere Ultraschallsonotroden auf, welche besonders bevorzugt auf die Böden der Behältnisse ausgerichtet sind. Auf diese Weise ist es möglich, dass die Böden der Behältnisse von mehreren Seiten her mit Ultraschall beaufschlagt werden, um so Schaum zu zerstören oder zu eine Tropfenbildung herbeizuführen. Eine Problematik bei Behältnisböden könnte nämlich darin bestehen, dass es Oberflächen des Behältnisbodens gibt, welche einer einzelnen Ultraschallsonotrode abgewandt sind. Durch das Vorsehen mehrerer derartiger Sonotroden kann eine im Wesentlichen umfängliche bzw. großflächige Zerstörung von Schaum auf den Böden der Behältnisse erfolgen.

Es hat sich herausgestellt, dass Wassertropfen die am Behältnisboden anhaften leichter bzw. mit geringerem Energieeinsatz/ Druck entfernbar sind, als planer und großflächig anhaftender Schaum.

Bei einer weiteren vorteilhaften Ausführungsform weist die Vorrichtung eine Abblaseinrichtung auf, welche Schaum insbesondere von dem Boden der Behältnisse abbläst. Dabei kann es sich insbesondere um solche Schaumreste handeln, welche auch nach der Ultraschallbeaufschlagung auf den Behältnissen in Form von Wassertropfen verblieben sind. Besonders bevorzugt ist daher diese Abblaseinrichtung entlang des Transportpfades der Behältnisse zwischen der Reinigungseinrichtung und der Inspektionseinrichtung angeordnet. Auch hier wäre es wiederum möglich, dass die Abblaseinrichtung mehrere Düsen aufweist, welche die Behältnisböden aus unterschiedlichen Richtungen mit Druckluft beaufschlagen. Auch wäre es möglich, dass mehrere solcher Abblasvorrichtungen, wie beispielsweise Abblasdüsen, entlang des Transportpfades hintereinander angeordnet sind.

Dabei ist es auch möglich, dass mehrere Abblasdüsen vorgesehen sind, welche die Behältnisböden aus mehreren Richtungen mit Druckluft beaufschlagen. Dabei kann wenigstens eine dieser Abblasdüsen derart ausgerichtet sein, dass sie eventuell noch vorhandene Schaumreste an der Außenwandung des Behältnisses nach unten drängt. An eine solche Abblasdüse, welche Schaumreste nach unten drängt, kann sich eine weitere Schaumdüse anschließen, welche Schaumreste von dem Behältnisboden entfernt.

Dabei ist es auch denkbar, dass eine Position dieser Abblasdüsen einstellbar ist, um eine Anpassung an unterschiedliche Behältnisgeometrien zu erreichen. Bevorzugt ist die Abblaseinrichtung in der Transportrichtung der Behältnisse stationär angeordnet. Auch die Schallerzeugungseinrichtung ist bevorzugt in der Transportrichtung der Behältnisse stationär angeordnet.

Dabei ist es jedoch möglich und bevorzugt, dass die Abblaseinrichtung mit (deutlich) geringerer Leistung betrieben wird als die im Stand der Technik eingesetzten Abblaseinrichtungen. Auf diese Weise können auch Verwirbelungen wesentlich geringer gehalten werden. Auch kommt es durch diese geringeren Leistungen nicht zu einem "Hochblasen" von Schaumresten entlang der Wandung der Behältnisse. Es wäre auch möglich, dass eine (weitere) Abblaseinrichtung in der Transportrichtung der Behältnisse vor der Schallerzeugungseinrichtung angeordnet ist.

Als besonders vorteilhaft hat sich herausgestellt, dass gepulst betriebene Abblasvorrichtungen wie beispielsweise nach DE20317458U1 mit vermindertem Druck und damit wesentlich reduzierter Lautstärke betrieben werden können. Die Lautstärke solcher 10-20ms dauernden Luftstöße erreichen ohne geeignete Schutzmaßnahmen wie Einhausung und Maschinenschutz ohne weiteres Werte >110dB. Die Reduzierung des Arbeitsdrucks dieser Abblaseinrichtung stellt damit eine große Verbesserung des Mitarbeiterschutzes dar.

Bei einer weiteren vorteilhaften Ausführungsform ist die Schallerzeugungseinrichtung unterhalb des Transportpfades der Behältnisse angeordnet. Diese Ausgestaltung ist insbesondere für eine Schaumzerstörung am Boden und insbesondere an der Unterseite des Bodens geeignet. Dabei ist es möglich, dass in dem Bereich, in dem die Schallerzeugungseinrichtung unterhalb des Transportpfades angeordnet ist, die Behältnisse beispielsweise über Seitenführungsbänder transportiert werden oder an ihren Mündungen gehalten werden, so dass die Behältnisböden für die Ultraschallbeaufschlagung zugänglich sind. Es wäre jedoch auch möglich, dass die Schallerzeugungseinrichtung schräg und nur teilweise unterhalb des Transportpfades der Behältnisse angeordnet ist. Durch eine derartige schräge Beaufschlagung wäre insbesondere auch eine Schaumentfernung in Bereichen des Bodens möglich, welche nicht direkt die Unterseite bilden, sondern sich in einer Umfangsrichtung des Behältnisses erstrecken.

Bei einer weiteren vorteilhaften Ausführungsform ist die Schallerzeugungseinrichtung dazu geeignet und bestimmt, Schall und insbesondere Ultraschall in einem Frequenzbereich zwischen 20 KHz und 100 KHz auszugeben. Bei einer weiteren vorteilhaften Ausführungsform weist die Schallerzeugungseinrichtung einen elektroakustischen Wandler auf. Insbesondere weist die Schallerzeugungseinrichtung ein piezoelektrisches Element auf. Bei einer weiteren vorteilhaften Ausführungsform ist ein Ultraschallfeld der Schallerzeugungseinrichtung auf den Bodenbereich der Behältnisse gerichtet. Bei einer weiteren bevorzugten Ausführungsform ist eine Leistungsaufnahme der Schallerzeugungseinrichtung geringer als 60W, bevorzugt geringer als 50W und bevorzugt geringer als 40W und/oder eine Ausgabeleistung der Schallerzeugungseinrichtung ist bevorzugt geringer als 60W, bevorzugt geringer 50W und besonders bevorzugt geringer als 40W.

Bei einer weiteren vorteilhaften Ausführungsform ist eine vordere Oberfläche der Sonotrode und insbesondere die Schall ausgebende Oberfläche der Sonotrode in Bezug auf die Behältnisse konkav geformt. Auf diese Weise kann der Schall auf die Behältnisse gebündelt werden. Dabei ist es möglich, dass eine Wölbung dieser konkav ausgebildeten Oberfläche kreisförmig und/oder parabolisch ausgebildet ist.

Bei einer weiteren vorteilhaften Ausführungsform sind zwei oder mehrere derartiger Sonotroden, wie oben erwähnt, vorgesehen und insbesondere entlang des Transportpfades hintereinander vorgesehen.

Auch käme eine Anordnung von zwei oder mehreren Schallerzeugungseinrichtungen an gleicher Position bezüglich der Transportrichtung in Frage, wobei bevorzugt diese zwei oder mehreren Schallerzeugungseinrichtungen die Behältnisse aus unterschiedlichen Richtungen mit Schall beaufschlagen.

Bei einer weiteren vorteilhaften Ausführungsform ist eine Position der Schallerzeugungseinrichtung und insbesondere der Sonotrode quer zu dem Transportpfad der Behältnisse einstellbar. Auf diese Weise ist es möglich, dass die Vorrichtung auf unterschiedliche Behältnisgeometrien und beispielsweise unterschiedliche Größen der Behältnisböden angepasst werden kann. Auch wäre es möglich, dass die Schallerzeugungseinrichtung und insbesondere die Sonotrode auch im laufenden Betrieb quer zu der Transporteinrichtung beweglich ist, so dass in einer bevorzugten Ausführungsform die Behältnisse gewissermaßen mittels Ultraschall "abgescannt" werden können. Bei einer weiteren vorteilhaften Ausführungsform ist die Schallerzeugungseinrichtung und insbesondere sind die Sonotroden getaktet betreibbar. So wäre es möglich, dass die Sonotroden immer nur in dem Moment aktiviert werden, in dem sich Behältnisse an diesen vorbeibewegen. Auf diese Weise kann eine Dauerbelastung der Sonotroden vermieden werden.

Weiterhin ist bei einer weiteren bevorzugten Ausführungsform die Sonotrode bzw. deren Betrieb mit der Transporteinrichtung synchronisiert. Auf diese Weise kann eine gezielte Schaumabblasung in bestimmten Bereichen der Behältnisse erreicht werden. Es wäre jedoch auch möglich, dass die Sonotrode kontinuierlich betrieben wird. Auch wäre es möglich, dass die Abblaseinrichtung mit der Transporteinrichtung synchronisiert ist, um nur bei bestimmten Positionierungen der Behältnisse eine Abblasung deren Böden auszulösen.

Weiterhin wäre es denkbar, dass stromabwärts bezüglich der Reinigungseinrichtung und/oder stromabwärts bezüglich der Abblaseinrichtung eine Bildaufnahmeeinrichtung vorgesehen ist, welche Bilder der Behältnisse und insbesondere der Behältnisböden aufnimmt. So könnte beispielsweise noch vor einem Eintritt der Behältnisse in die eigentliche Inspektionseinrichtung geprüft werden, ob sich (noch) Schaumreste an den Behältnissen und insbesondere an den Behältnisböden befinden. Falls festgestellt wird, dass sich an den Behältnisse vor dem Eintritt in die Inspektionseinrichtung noch Schaumreste an deren Böden befinden, könnte ein entsprechendes Warnsignal ausgegeben werden. Auch wäre es in diesem Falle möglich, dass eine weitere Abblaseinrichtung aktiviert wird, um auch diesen noch Verbliebenen Schaum zu entfernen.

Bei einer weiteren vorteilhaften Ausführungsform weisen die Schallerzeugungseinrichtungen Kühleinrichtungen auf, um Bestandteile der Schallerzeugungseinrichtungen und insbesondere die Sonotroden zu kühlen. Dabei kann es sich beispielsweise um eine Luftkühlung handeln. Daneben wäre jedoch auch eine Flüssigkeitskühlung der Sonotroden denkbar.

Bei einer weiteren vorteilhaften Ausführungsform werden die Behältnisse wenigstens in einem Bereich der Schallerzeugungseinrichtung bodenfrei transportiert. Zu diesem Zweck können beispielsweise Seitenführungsbänder vorgesehen sein, welche die Behältnisse an deren Außenumfang kontaktieren und so transportieren. Auch könnten Greifeinrichtungen vorgesehen sein, welche die Behältnisse beispielsweise an deren Mündungen und/oder an deren Tragringen greifen.

Bevorzugt transportiert die Transporteinrichtung die Behältnisse wenigstens abschnittsweise entlang einer geradlinigen Transportrichtung. Bevorzugt werden die Behältnisse wenigstens in demjenigen Bereich, in dem sie mit Schall beaufschlagt werden, geradlinig transportiert. Bevorzugt werden die Behältnisse auch während eines geradlinigen Transports von der Inspektionseinrichtung inspiziert. Es wäre jedoch auch ein gekrümmter Transport und insbesondere ein Transport entlang einer Kreislinie denkbar. Bei einer weiteren bevorzugten Ausführungsform ist die Transporteinrichtung dazu geeignet und bestimmt, die Behältnisse vereinzelt zu transportieren. Dies bedeutet, dass die Behältnisse bevorzugt derart transportiert werden, dass zwischen aufeinanderfolgenden Behältnissen jeweils ein Abstand besteht. Bevorzugt werden die Behältnisse mit einer gleichmäßigen Teilung transportiert.

Weiterhin ist es denkbar, dass die Vorrichtung eine Dreheinrichtung aufweist, welche die Behältnisse - insbesondere während deren Transport - auch um einen vorgegebene geometrische Achse dreht, wobei es sich bei dieser Achse besonders bevorzugt um eine Längsachse der Behältnisse handelt. Dabei kann es sich bei dieser Dreheinrichtung beispielsweise um einen in die Mündung der Behältnisse eingreifenden Haltedorn handeln, der selbst wiederum drehbar (gelagert) ist. Daneben können auch mit unterschiedlicher Geschwindigkeit laufende Seitenführungsbänder vorgesehen sein, wobei durch eine Differenzgeschwindigkeit dieser Seitenführungsbänder eine Drehung der Behältnisse bezüglich deren Längsachse erzeugt wird. Bevorzugt sind derartige Seitenführungsbänder derart angeordnet, dass auch ein seitlicher Bodenbereich der Behältnisse nicht von diesen Seitenführungsbändern kontaktiert wird.

Bei einer weiteren vorteilhaften Ausführungsform weist die Vorrichtung eine weitere Ultraschallerzeugungseinrichtung auf, welche bevorzugt in der Transportrichtung von der Ultraschallerzeugungseinrichtung beabstandet ist. Dabei ist es möglich, dass auch diese weitere Ultraschallerzeugungseinrichtung auf die Böden der Behältnisse ausgerichtet ist. Bevorzugt ist diese weitere Ultraschallerzeugungseinrichtung jedoch (zumindest auch) auf einen Bereich der Transporteinrichtung ausgerichtet. So ist es möglich, dass die Ultraschallerzeugungseinrichtung auf ein Transportband oder einen Abschnitt eines Transportbands ausgerichtet ist, welches die Behältnisse transportiert. Eine derartige Beaufschlagung der Transporteinrichtung, etwa der Oberseite eines Transportbandes kann bereits eine übermäßige Schaumbildung auf diesem Band verhindern.

Vorteilhaft ist diese weitere Ultraschallerzeugungseinrichtung in der Transportrichtung der Behältnisse vor der oben erwähnten Ultraschallerzeugungseinrichtung, welche auf die Böden der Behältnisse ausgerichtet ist, angeordnet.

Bei einer weiteren bevorzugten Ausführungsform weist die Transporteinrichtung mehrere Transporteinheiten auf, welche die Behältnisse bevorzugt an unterschiedlichen Bereichen transportieren. So kann etwa eine erste Transporteinheit in Form eines Transportbandes vorgesehen sein und an diese erste Transporteinheit kann sich eine zweite Transporteinheit, etwa in Form von Seitenführungsbändern anschließen. Die oben genannte weitere Ultraschallerzeugungseinrichtung kann dabei auf das Transportband ausgerichtet sein und die oben erwähnte Ultraschallerzeugungseinrichtung kann in einem Bereich der Seitenführungsbänder vorgesehen und dort auf die Böden der Behältnisse ausgerichtet sein.

Die vorliegende Erfindung ist, wie in Anspruch 9 definiert, weiterhin auf ein Verfahren zum Inspizieren von Behältnissen gerichtet, wobei die Behältnisse mittels einer Transporteinrichtung entlang eines vorgegebenen Transportpfades transportiert werden und während dieses Transports von der Inspektionseinrichtung inspiziert werden und wobei die Behältnisse vor deren Inspektion mittels einer Reinigungseinrichtung wenigstens abschnittsweise an ihrer Außenoberfläche gereinigt werden.

Erfindungsgemäß beaufschlagt die Reinigungseinrichtung mittels wenigstens einer Schallerzeugungseinrichtung zumindest die Böden der Behältnisse derart mit Schall, dass an diesen Böden befindlicher Schaum zerstört wird.

Es wird also auch verfahrensseitig vorgeschlagen, dass insbesondere die Böden der Behältnisse mit Schall und insbesondere mit Ultraschall beaufschlagt werden. Vorteilhaft werden die Behältnisse insbesondere nach der Beaufschlagung mit Schall auch mittels Druckluft beaufschlagt. Bei einer weiteren vorteilhaften Ausführungsform wird die Schallerzeugungseinrichtung getaktet betrieben. Dieser getaktete Betrieb dient insbesondere dazu, um die Schallerzeugungseinrichtung, wie beispielsweise eine Sonotrode, zu schonen.

Bei einem weiteren vorteilhaften Verfahren werden die Behältnisse kontinuierlich transportiert. Vorteilhaft werden die Behältnisse wenigstens zeitweise während ihres Transports um ihre Längsachsen gedreht.

Weitere Vorteile und Ausführungsformen ergeben sich aus der beigefügten Zeichnung:
Darin zeigt:
- Fig. 1: eine schematische Darstellung einer erfindungsgemäßen Vorrichtung zum Inspizieren von Behältnissen; und
- Fig. 2: eine schematische Darstellung einer weiteren Ausführungsform einer erfindungsgemäßen Vorrichtung zum Inspizieren von Behältnissen.

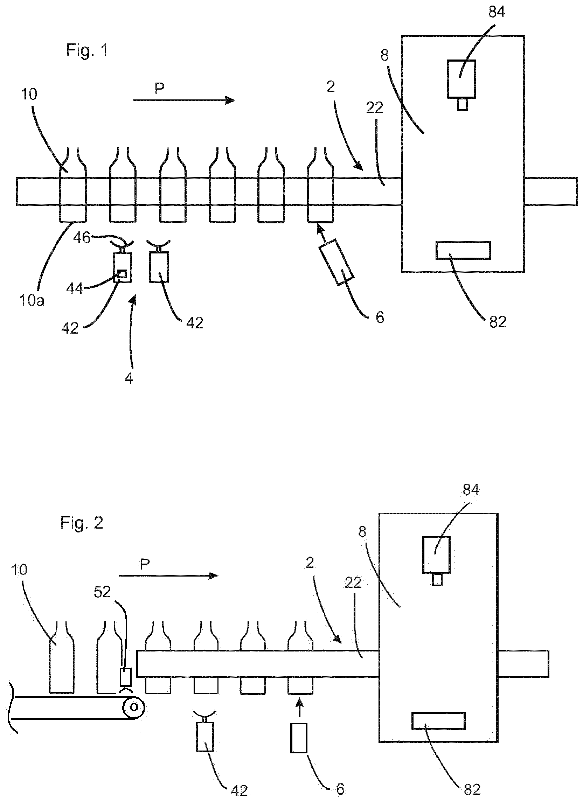

Figur 1 zeigt eine schematische Darstellung einer Vorrichtung 1 zum Inspizieren von Behältnissen 10. Diese Vorrichtung weist dabei eine in ihrer Gesamtheit mit 2 bezeichnete Transporteinrichtung auf, welche in dem gezeigten Bereich in Form zweier Seitenführungsbänder ausgeführt ist, zwischen denen die Behältnisse geführt werden. Wie oben ausgeführt, kann anstelle der hier gezeigten Transporteinheit 22 in Form der Seitenführungsbänder auch eine andere Art des Transportes in Frage kommen. Vorteilhaft transportiert die Transporteinrichtung 2 die Behältnisse jedoch zumindest abschnittsweise geradlinig und insbesondere im Bereich der Inspektion geradlinig und bodenfrei.

Das Bezugszeichen 8 kennzeichnet grob schematisch eine Inspektionseinrichtung, welche zum Inspizieren der Behältnisse 10 dient. Diese Inspektionseinrichtung weist dabei eine Beleuchtungseinrichtung 82 auf, welche hier Böden 10a der Behältnisse beleuchtet. Eine Bildaufnahmeeinrichtung 84, wie etwa eine Kamera, welche hier oberhalb eines Transportpfads der Behältnisse angeordnet ist, nimmt ortsaufgelöste Bilder der so beleuchteten Behältnisse auf. Damit werden die Behältnisse 10 hier im Durchlichtverfahren inspiziert.

In der Transportrichtung P stromaufwärts bezüglich der Inspektionseinrichtung 8 ist eine Reinigungseinrichtung 4 vorgesehen. Diese Reinigungseinrichtung 4 weist hier zwei Ultraschallerzeugungseinrichtungen 42 auf. Diese Ultraschallerzeugungseinrichtungen 42 weisen dabei ein nur schematisch dargestelltes Piezoelement 44 auf (welches den Schall bzw. Schwingungen erzeugt) sowie eine Schallausgabeeinrichtung 46, welche auf Böden 10a der Behältnisse 10 ausgerichtet ist. Diese Schallausgabeeinrichtung 46 ist dabei konkav gekrümmt, um so den Schall besser auf die Böden der Behältnisse zu fokussieren. Anders als gezeigt können die beiden gezeigten Schallerzeugungseinrichtungen 42 auch hinsichtlich ihrer Winkel versetzt angeordnet sein, um so die Böden 10a der Behältnisse aus unterschiedlichen Richtungen mit Schall zu beaufschlagen.

Stromabwärts bezüglich der Reinigungseinrichtung 42 ist eine Abblaseinrichtung 6 vorgesehen, welche gegebenenfalls noch verbleibende Schaumreste beispielsweise durch Druckluft von den Behältnissen entfernt. Insbesondere auch durch das Zusammenwirken der Schallerzeugungseinrichtung 42 und der Abblaseinrichtung 6 können die Behältnisböden frei von Schaum gehalten werden bzw. von Schaumresten befreit werden.

Fig. 2 zeigt eine alternative und bevorzugte Anordnung. Anstelle einer Wasserabschwallung des einlaufenden Transporteurs und der damit verbundenen Wasserverschleppung in die Behälterinspektionsmaschine 8 wird eine erste Ultraschalleinrichtung 52 (oben als weitere Ultraschallerzeugungseinrichtung bezeichnet) auf die Transporteuroberseite gerichtet. Somit wird eine übermäßige Schaumbildung auf dem Transporteur verhindert. Mit einer zweiten Ultraschalleinrichtung wird dann lediglich sich im Bodendom befindlicher Schaum zerstört. Besonders bevorzugt ist diese Anordnung bei ungünstig geformten Bodengeometrien wie z.B. Champagner- und/ oder Pentaloidböden sowie Bodenkonstruktionen die für beispielsweise Heißabfüllung geeignet sind.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können. Der Schutzbereich der vorliegenden Erfindung ist in den anliegenden Patentansprüchen definiert.

### Bezugszeichenliste

- P: Transportrichtung
- 1: Vorrichtung
- 2: Transporteinrichtung
- 4: Reinigungseinrichtung
- 6: Abblaseinrichtung
- 8: Inspektionseinrichtung
- 10: Behältnis
- 10a: Boden
- 22: Transporteinheit
- 42: Ultraschallerzeugungseinrichtung/Reinigungseinrichtung
- 44: Piezoelement
- 46: Schallausgabeeinrichtung
- 52: Ultraschallerzeugungseinrichtung
- 82: Beleuchtungseinrichtung
- 84: Bildaufnahmeeinrichtung

## Patentansprüche

1. Vorrichtung (1) zum Inspizieren von Behältnissen (10) mit einer Transporteinrichtung (2), welche die Behältnisse entlang eines vorgegebenen Transportpfads (P) transportiert und mit einer Inspektionseinrichtung (8), welche die Behältnisse inspiziert, wobei die Vorrichtung (1) eine der Inspektionseinrichtung (8) in der Transportrichtung der Behältnisse (10) vorangestellte Reinigungseinrichtung (4) aufweist, welche die Behältnisse wenigstens abschnittsweise an deren Außenoberflächen reinigt,
**dadurch gekennzeichnet, dass**
die Reinigungseinrichtung (4) wenigstens eine Schallerzeugungseinrichtung (42) aufweist, welche zumindest auch derart auf Böden der Behältnisse (10) ausgerichtet ist, dass an diesen Böden befindlicher Schaum zerstört wird.

2. Vorrichtung (1) nach Anspruch 1,
**dadurch gekennzeichnet, dass**
die Schallerzeugungseinrichtung (42) wenigstens eine Ultraschallsonotrode ist oder aufweist.

3. Vorrichtung (1) nach wenigstens einem der vorangegangenen Ansprüche,
**dadurch gekennzeichnet, dass**
die Vorrichtung (1) eine Abblaseinrichtung (6) aufweist, welche Schaum insbesondere von dem Boden (10a) der Behältnisse (10) abbläst.

4. Vorrichtung (1) nach Anspruch 3,
**dadurch gekennzeichnet, dass**
diese Abblaseinrichtung (6) entlang des Transportpfads der Behältnisse (10) zwischen der Reinigungseinrichtung (4) und der Inspektionseinrichtung (8) angeordnet ist.

5. Vorrichtung (1) nach wenigstens einem der vorangegangenen Ansprüche,
**dadurch gekennzeichnet, dass**
die Schallerzeugungseinrichtung (42) unterhalb des Transportpfads der Behältnisse (10) angeordnet ist.

6. Vorrichtung (1) nach wenigstens einem der vorangegangenen Ansprüche,
**dadurch gekennzeichnet, dass**
die Schallerzeugungseinrichtung Schall in einem Frequenzbereich zwischen 20kHz und 100kHz ausgibt.

7. Vorrichtung (1) nach wenigstens einem der vorangegangenen Ansprüche,
**dadurch gekennzeichnet, dass**
die Transporteinrichtung (2) die Behältnisse wenigstens in einem Bereich der Schallerzeugungseinrichtung (42) bodenfrei transportiert.

8. Vorrichtung (1) nach wenigstens einem der vorangegangenen Ansprüche,
**dadurch gekennzeichnet, dass** die Schallerzeugungsvorrichtung (42) eine erste Ultraschallerzeugungseinrichtung (42) ist und dass
die Vorrichtung (1) eine weitere Ultraschallerzeugungseinrichtung (52) aufweist, welche bevorzugt in der Transportrichtung von der Ultraschallerzeugungseinrichtung (42) beabstandet ist.

9. Verfahren zum Inspizieren von Behältnissen (10), wobei die Behältnisse (10) mittels einer Transporteinrichtung (2) entlang eines vorgegebenen Transportpfads (P) transportiert werden und während dieses Transports von einer Inspektionseinrichtung (8) inspiziert werden und wobei die Behältnisse (10) vor deren Inspektion mittels einer Reinigungseinrichtung (4) wenigstens abschnittsweise an ihrer Außenoberfläche gereinigt werden,
**dadurch gekennzeichnet, dass**
die Reinigungseinrichtung (4) mittels wenigstens einer Schallerzeugungseinrichtung (42) zumindest die Böden der Behältnisse (10) derart beaufschlagt, dass an diesen Böden befindlicher Schaum zerstört wird.

10. Verfahren nach Anspruch 9,
**dadurch gekennzeichnet, dass**
die Schallerzeugungseinrichtung getaktet betrieben wird.

11. Verfahren nach wenigstens einem der vorangegangenen Ansprüche,
**dadurch gekennzeichnet, dass**
die Behältnisse bodenfrei transportiert werden.

## Claims

1. Apparatus (1) for inspecting containers (10) with a transport device (2) which transports the containers along a predetermined transport path (P) and with an inspection device (8) which inspects the containers, wherein the apparatus (1) has a cleaning device (4) which precedes the inspection device (8) in the transport direction of the containers (10) and which cleans the containers at least in sections on their outer surface areas,
**characterized in that**
the cleaning device (4) comprises at least one sound generating device (42) which is at least also aligned to the bottom of the containers (10) in such a way that foam on this bottom is destroyed.

2. Apparatus (1) according to claim 1,
**characterized in that**
the sound generating device (42) is or comprises at least one ultrasonic sonotrode.

3. Apparatus (1) according to at least one of the preceding claims,
**characterized in that**
the apparatus (1) comprises a blow-off device (6) which blows off foam, in particular from the bottom (10a) of the containers (10).

4. Apparatus (1) according to claim 3,
**characterized in that**
said blow-off device (6) is arranged along the transport path of the containers (10) between the cleaning device (4) and the inspection device (8).

5. Apparatus (1) according to at least one of the preceding claims,
**characterized in that**
the sound generating device (42) is arranged below the transport path of the containers (10).

6. Apparatus (1) according to at least one of the preceding claims,
**characterized in that**
the sound generating device outputs sound in a frequency range between 20 kHz and 100 kHz.

7. Apparatus (1) according to at least one of the preceding claims,
**characterized in that**
the transport device (2) transports the containers free of the floor in at least one area of the sound generating device (42).

8. Apparatus (1) according to at least one of the preceding claims,
**characterized in that**
the sound generating device (42) is a first ultrasonic generating device (42) and **in that** the apparatus (1) comprises a further ultrasonic generating device (52), which preferably in the direction of transport from the ultrasound generating device (42) is spaced apart.

9. A method of inspecting containers (10), wherein the containers (10) are transported by means of a transport device (2) along a predetermined transport path (P) and during this transport are inspected by an inspection device (8) and wherein the containers (10) are cleaned at least in sections on their outer surface by means of a cleaning device (4) before they are inspected,
**characterized in that**
the cleaning device (4) by means of at least one sound generating device (42) applies the bottoms of the containers (10) in such a way that foam on these bottoms is destroyed.

10. The method according to claim 9,
**characterized in that**
the sound generating device is operated in a clocked manner.

11. The method according to at least one of the preceding claims,
**characterized in that**
the containers are transported free of the floor.

## Revendications

1. Dispositif (1) d'inspection de récipients (10) avec un système de transport (2), lequel transporte les récipients le long d'un trajet de transport (P) spécifié, et avec un système d'inspection (8), lequel inspecte les récipients, dans lequel le dispositif (1) présente un système de nettoyage (4) installé en amont du système d'inspection (8) dans la direction de transport des récipients (10), lequel nettoie les récipients au moins par endroits sur leurs surfaces extérieures,
**caractérisé en ce que**
le système de nettoyage (4) présente au moins un système de production de sons (42), lequel est orienté au moins également sur des fonds des récipients (10) de manière à détruire de la mousse se trouvant sur ces fonds.

2. Dispositif (1) selon la revendication 1,
**caractérisé en ce**
**que** le système de production de sons (42) est ou présente au moins une sonotrode à ultrasons.

3. Dispositif (1) selon au moins l'une quelconque des revendications précédentes,
**caractérisé en ce que**
le dispositif (1) présente un système d'évacuation par soufflage (6), lequel évacue par soufflage de la mousse en particulier du fond (10a) des récipients (10).

4. Dispositif (1) selon la revendication 3,
**caractérisé en ce que**
ledit système d'évacuation par soufflage (6) est disposé le long du trajet de transport des récipients (10) entre le système de nettoyage (4) et le système d'inspection (8).

5. Dispositif (1) selon au moins l'une quelconque des revendications précédentes,
**caractérisé en ce que**
le système de production de sons (42) est disposé sous le trajet de transport des récipients (10).

6. Dispositif (1) selon au moins l'une quelconque des revendications précédentes,
**caractérisé en ce que**
le système de production de sons émet des sons dans une plage de fréquences entre 20 kHz et 100 kHz.

7. Dispositif (1) selon au moins l'une quelconque des revendications précédentes,
**caractérisé en ce que**
le système de transport (2) transporte sans fond les récipients au moins dans une zone du système de production de sons (42).

8. Dispositif (1) selon au moins l'une quelconque des revendications précédentes,
**caractérisé en ce que**
le dispositif de production de sons (42) est un premier système de productions d'ultrasons et que le dispositif (1) présente un autre système de production d'ultrasons (52), lequel est tenu à distance du système de production d'ultrasons (42) de manière préférée dans la direction de transport.

9. Procédé d'inspection de récipients (10), dans lequel les récipients (10) sont transportés au moyen d'un système de transport (2) le long d'un trajet de transport (P) spécifié et sont inspectés au cours dudit transport par un système d'inspection (8), et dans lequel les récipients (10) sont nettoyés avant leur inspection au moyen d'un système de nettoyage (4) au moins par endroits sur leur surface extérieure,
**caractérisé en ce que**
le système de nettoyage (4) soumet au moyen d'au moins un système de production de sons (42) au moins les fonds des récipients (10) de manière à détruire de la mousse se trouvant sur lesdits fonds.

10. Procédé selon la revendication 9,
**caractérisé en ce que**
le système de production de sons fonctionne de manière cadencée.

11. Procédé selon au moins l'une quelconque des revendications précédentes,
**caractérisé en ce que**
les récipients sont transportés sans fond.
